## Europäisches Patentamt

(19) **European Patent Office**

**Office européen des brevets**

(11) Numéro de publication: **0 089 731**
**B1**

(12) **FASCICULE DE BREVET EUROPEEN**

(45) Date de publication du fascicule du brevet:
**31.07.85**

(51) Int. Cl.⁴: **H 04 N 5/44**

(21) Numéro de dépôt: **83200398.2**

(22) Date de dépôt: **23.03.83**

(54) Procédé pour transmettre des données dans un récepteur de télévision, et récepteur utilisant ce procédé.

(30) Priorité: **24.03.82 FR 8205009**

(43) Date de publication de la demande:
**28.09.83 Bulletin 83/39**

(45) Mention de la délivrance du brevet:
**31.07.85 Bulletin 85/31**

(84) Etats contractants désignés:
**BE DE FR GB IT**

(56) Documents cités:
**GB - A - 2 006 559**

(73) Titulaire: **LA RADIOTECHNIQUE, Société Anonyme dite:,
51, rue Carnot BP 301, F-92156 Suresnes Cedex (FR)**
(84) Etats contractants désignés: **FR**

(73) Titulaire: **N.V. Philips' Gloeilampenfabrieken,
Groenewoudseweg 1, NL-5621 BA Eindhoven (NL)**
(84) Etats contractants désignés: **BE DE GB IT**

(72) Inventeur: **Gerot, Guy, S.P.I.D. 209 rue de l'Université,
F-75007 Paris (FR)**

(74) Mandataire: **Pinchon, Pierre et al, Société Civile
S.P.I.D. 209 rue de L'Université, F-75007 Paris (FR)**

**0 089 731**

## Description

L'invention concerne un procédé pour transmettre, dans un récepteur de télévision, des messages d'informations entre un organe de commande et plusieurs organes à commander, selon lequel on code numériquement lesdites informations et on les transmet en séquence sur une ligne.

Elle concerne également un téléviseur dont les données de réglage ou de commutation sont transmises, au moyen d'un codage numérique par bits, entre des moyens de commande à la disposition de l'usager et des organes à commander du téléviseur.

L'invention intéresse l'industrie électronique, et particulièrement la fabrication des téléviseurs.

Dans un récepteur de télévision, il y a une quantité d'informations à transmettre entre des éléments de commande accessibles à l'utilisateur et les circuits fonctionnels du téléviseur, qui doivent répondre à ces commandes. Les éléments de commande sont par exemple les boutons de réglage de lumière, de contraste, de puissance sonore ou bien des boutons de commutation de bandes et de normes, de commutation »noir et blanc/couleur« ou »mono/stéréo«, etc ... Ces éléments de commande sont en général groupés dans le susdit organe de commande. Les éléments à commander sont répartis un peu partout dans le téléviseur et la transmission des commandes utilise un grand nombre de fils d'interconnexion spécialisés, dont le cablage est coûteux et dont le dépannage est difficile. On a donc imaginé dans l'art antérieur d'utiliser un système d'adressage des organes à commander, associé à une transmission séquentielle des informations. Un tel procédé est connu par exemple du brevet anglais n° 2 006 559. Dans le téléviseur décrit par ce document, chaque organe de commande est connecté via une matrice à un circuit de codage, ce dernier étant connecté à un microprocesseur, ce dernier étant connecté aux organes à commander par une ligne multifilaire dite bus de données, et une autre ligne multifilaire dite bus d'adresse, selon un procédé connu, universellement employé dans les systèmes à microprocesseur.

La technique décrite dans ce document est très élaborée, puis qu'elle utilise un microprocesseur.

Elle s'applique avantageusement à des téléviseurs de haut de gamme. La connexion aux organes à commander par deux bus représente un grand nombre de fils, dont le cablage est coûteux. C'est pourquoi, dans le cas de téléviseurs courants, la Demanderesse a souhaité réduire le nombre des fils de cablage et en outre éviter l'emploi d'un microprocesseur et s'est donc livré à des recherches afin d'obtenir le procédé le plus simple et le meilleur marché possible.

L'idée sur laquelle repose l'invention est qu'au lieu d'utiliser une horloge spécialisée comme il est d'usage courant avec un microprocesseur ou microcalculateur, on peut profiter de la synchronisation du balayage lignes, présente dans tout téléviseur, pour assurer le contrôle des temps d'une transmission numérique séquentielle.

C'est ainsi que, selon l'invention, un procédé est notamment remarquable en ce qu'on déclenche chaque début de message en relation avec un signal de télévision dit de trame, en ce qu'on transmet les bits de chaque information en séquence sur ladite ligne qui est unifilaire, et en ce qu'on utilise le numéro d'ordre de chaque ligne de balayage dans l'image pour définir quel organe à commander est concerné par un bit transmis à un instant déterminé, ainsi que la signification de ce bit.

Ce procédé offre l'avantage de ne pas nécessiter d'horloge spécialisée pour piloter la transmission numérique, non plus que de microprocesseur.

Dans une variante, le procédé est remarquable en ce qu'on transfère un bit par ligne de balayage d'image.

Ainsi la réalisation de compteurs de temps permettant de déterminer a quel organe adresser chaque bit est simplifiée au maximum, et l'on dispose cependant d'une capacité de transmission suffisante.

Une amélioration du procédé selon l'invention consiste en ce que la ligne unique transmettant les données est utilisée en plus pour transmettre les signaux de synchronisation de ligne et trame, grâce à un double codage analogique.

Ainsi on économise un fil de cablage supplémentaire.

Un téléviseur selon l'invention est remarquable en ce que chaque organe ou groupe d'organes à commander est muni d'un circuit destiné à reconnaitre un (des) numéro(s) prédéterminé(s) de ligne(s) de balayage d'image, de façon à autoriser les bits transmis à commander ledit organe à certains instants seulement.

Ceci permet d'éviter la présence d'un bus d'adresses, ce qui économise donc un cablage coûteux entre les différents organes.

Avantageusement, un téléviseur selon l'invention comporte une ligne unifilaire pour transmettre en séquence les données vers les organes à commander.

Grâce à cette caractéristique, on économise le cablage des bus multifilaires de l'art antérieur.

En outre, ladite ligne unifilaire transmet avantageusement le séquencement des données en même temps que les données elles mêmes, grâce à un codage à deux niveaux d'amplitude.

Ceci économise encore un fil de cablage.

La description qui va suivre, en regard des dessins annexés, décrivant un exemple de réalisation non limitatif, fera bien comprendre comment l'invention peut être réalisée.

La figure 1 représente un bloc diagramme simplifié des éléments utilisés pour une mise en oeuvre du procédé.

2

**0 089 731**

La figure 2 représente un signal dit »sandcastle« et un signal de données.

La figure 3 représente un signal transmettant à la fois des informations et des signaux de synchronisation.

La figure 4 montre une disposition de circuit pour engendrer le signal de la figure 3.

La figure 5 représente un bloc diagramme d'une fonction »récepteur« incluse dans chacun des organes à commander.

La figure 6 représente un bloc diagramme d'une fonction »émetteur« incluse dans un organe de commande, pour la transmission de données de réglage et de commutation.

La figure 7 représente un bloc diagramme d'une autre forme d'une fonction »émetteur« incluse dans un organe de commande, pour la transmission de données de réglage et de commutation.

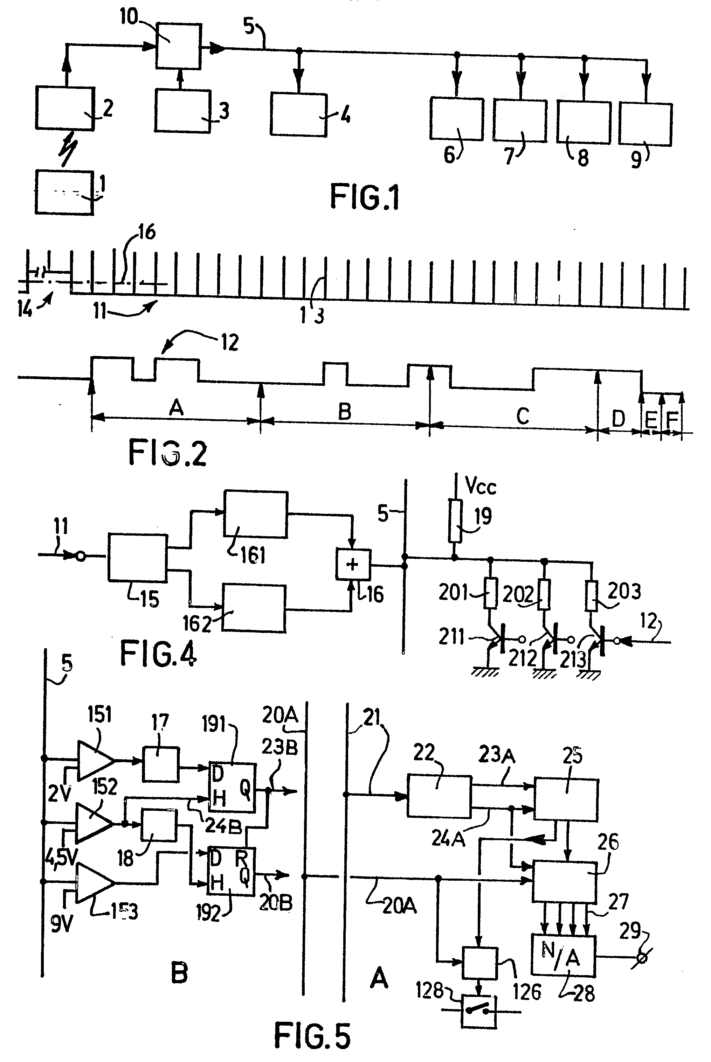

La figure 1 représente des éléments d'un téléviseur selon l'invention, dont les données de réglage ou de commutation sont transmises, au moyen d'un codage numérique par bits, entre des moyens 3 de commande à la disposition de l'usager et des organes 6, 7, 8, 9 à commander.

Les éléments 1 et 2 représentent un émetteur de télécommande et le récepteur correspondant, l'ensemble 1—2 ayant donc une fonction semblable à celle des moyens 3 de commande, qui sont constitués, quant à eux, par les potentiomètres et/ou interrupteurs placés sur le téléviseur lui même. Les moyens et procédés utilisés pour coder, transmettre et décoder les ordres de télécommande sont conventionnels et ne font pas partie de l'invention.

Les organes 6, 7, 8, 9 sont par exemple une base de temps lignes, un tuner, une platine de décodage couleur et luminance, dite chroma, et une platine pour le son, dite audio.

Une ligne unifilaire 5 transmet en séquence les données des organes de commande 1, 2, 3 vers les organes à commander 6, 7, 8, 9.

Cette ligne peut transmettre en même temps le séquencement des données.

En 10 est représenté un dispositif d'écriture sur bus, qui est un »sérialiseur-séquenceur« transformant les données fournies en parallèle par les dispositifs 2 et 3 en messages d'informations séquentielles.

En 4 est représenté un afficheur, dont le role est de rappeler à l'utilisateur quel programme ou quel réglage est en vigueur, à un instant donné.

Une liste non limitative, et donnée à titre d'exemple, des informations susceptibles d'être transmises selon l'invention, est la suivante:

| | |
|---|---|
| Réglages Vidéo | — lumière |
| | — contraste |
| | — saturation couleur |
| Réglages Audio | — volume |
| | — aigues |
| | — basses |
| | — balance |
| Commutations Audio | — mono/stéréo |
| | — effet »spatial« |
| | — effet physiologique |
| | — coupure son |
| | — second langage |
| Réglages Programme | — accord |
| | — controle automatique de fréquence |
| Commutations Programmes | — sélection des programmes |
| | — sélection des bandes |
| | — sélection des normes |
| | — coupure CAF fugitive |
| | — coupure CAF permanente |
| | — commutation lente |
| | — présence d'émission |
| Autres fonctions | — mémorisation des préréglages |
| | — rappel des préréglages |
| | — affichage (programme, fonction..) |

Selon le procédé de l'invention, pour transmettre dans un récepteur de télévision, des messages d'informations entre un organe de commande 1, 2, 3 et plusieurs organes à commander 6, 7, 8, 9, on code numériquement lesdites informations, on les transmet en séquence sur une ligne 5, on déclenche chaque début de message en synchronisme avec un signal de télévision dit de trame, on transmet les bits de chaque information en séquence sur la susdite ligne 5 qui est unifilaire, et on utilise le numéro d'ordre de chaque ligne de balayage dans l'image pour définir quel organe à commander est concerné par un bit transmis à un instant déterminé, et la signification de ce bit.

Pour obtenir le synchronisme avec les signaux de trame et connaître le numéro d'ordre de chaque ligne, on utilise avantageusement un signal, dit »sandcastle« dans le vocabulaire de l'homme du

3

métier. Ce signal représenté en 11 sur la figure 2, comporte un palier 14 de hauteur moyenne (par exemple environ 2,5 volts) pendant le temps dit »retour de trame« ou »retour d'image«; il comporte de surcroit des impulsions 13 correspondant aux temps dits »retours ligne«, à un niveau haut, par exemple environ 4,5 volts. Les implusions sont elles mêmes surmontées d'impulsions concernant la couleur, non représentées, et qui ne nous intéressent pas ici.

Les informations à transmettre, codées numériquement et fournies séquentiellement, sont représentées en 12. On convient, par exemple, de commencer l'émission à partir de la première impulsion de ligne suivant la fin du »retour trame«. Le numéro d'ordre de chaque ligne de balayage, c'est à dire le numéro d'ordre des impulsions 13 indique ce que signifie chaque bit de la séquence 12. Ici on transmet donc un bit par ligne de balayage d'image. On pourrait choisir d'autres quantités de bits par ligne ou de lignes par bit, au prix d'une complication des circuits de codage ou de décodage. Dans le signal 12, par exemple les bits 0 à 7, indiqués A et valant ici 11011000, représentent une valeur de réglage A qui peut être le volume du son, les bits 8 à 15 indiqués B et valant ici 00010001, une autre valeur de réglage B qui peut être le volume d'aigu, et ainsi de suite, des valeurs utilisant moins de capacité d'information peuvent être insérées dans la suite de bits, ou placées à la fin. Ici la valeur D comprenant deux bits peut être une indication de normes (SECAM, PAL, NTSC . . . ), les valeurs E, F à un seul bit représentent des états de commutateurs, tels que »mono/stéréo«.

Le signal 11 »sandcastle« est présent de toute façon dans la plupart des sous-ensembles d'un téléviseur, ce qui permet de ne cabler, entre ces sous-ensembles et les modules »émetteur«, qu'un seul fil transmettant le signal 12. Toutefois certains sous-ensembles ne reçoivent pas habituellement le signal 11 (par exemple les parties audio). Il est donc avantageux que la ligne unique 5 transmettant les informations soit utilisée en plus pour transmettre les signaux de synchronisation de ligne et trame, grâce à un double codage analogique. Ceci peut être obtenu par exemple à l'aide du signal 30 de la figure 3. En 14 est représenté le temps de »retour de trame«, pendant lequel le signal est, par exemple, à un niveau de tension de 3 volts. Pendant ce retour de trame, les signaux de retour de ligne 13 restent apparents, en atteignant un niveau de tension de, par exemple, 12 volts. Pendant la transmission du signal de données, ces signaux de retour de ligne atteignent des niveaux de tension différents selon que le bit transmis est »1« ou »0«. Ils atteignent par exemple 12 volts pour un 1, et 6 volts pour un zéro. La comparaison du signal 30 avec un seuil 31, par exemple de 4,5 volts, permet de discriminer les impulsions de retour ligne. La comparaison avec un seuil 32, de par exemple 9 volts, permet de discriminer le signal de données, et enfin la comparaison à un seuil 33 de, par exemple, 2 volts permet de discriminer les impulsions de retour trame et ligne.

Le schéma de la figure 4 montre comment engendrer le signal de la figure 3 à partir des deux signaux 11, 12 de la figure 2. Le signal 11 est introduit dans un détecteur de niveaux 15 qui sépare les signaux de trame et de ligne et les envoie respectivement aux circuits 161 et 162 de mise en forme. Ils sont enfin additionnés dans le circuit 16 qui commande le fil 5. Ce circuit délivre en sortie deux niveaux de courant qui développent dans la résistance 19 deux niveaux de tension. Le signal de données 12 commande un transistor 213 qui fait chuter la tension sur le fil 5 dans un rapport déterminé par les résistances 19 et 203. Ce signal de données peut être introduit sur le fil 5 en plusieurs points différents, ce qui est indiqué par la présence des autres transistors 211 et 212 et des autres résistances 201 et 202. Chacun de ces transistors sera rendu conducteur par exemple lorsqu'il s'agit d'envoyer un bit 1 et bloqué pour un bit 0 ou bien lorsque ce n'est pas son tour de transmettre. On a ainsi créé le signal 30 de la figure 3 sur le fil 15. En disposant les circuits 161, 162 et 16 à une place telle que les signaux de retour ligne et trame y soient disponibles séparément, le détecteur de niveaux 15 peut être économisé. Ceci est possible puisque chacun des éléments ou groupes d'éléments [161, 162, 16], [19], [211, 201], [212, 202], [213, 203] peut être branché en n'importe quel point du fil 5.

La description qui va suivre fera bien comprendre comment réaliser une fonction »récepteur« à l'intérieur d'un organe à commander, puis comment réaliser une commande à base de touches +/−, et enfin comment réaliser une commande à partir de potentiomètres. En ce qui concerne une fonction récepteur, on entend par »à l'intérieur d'un organe à commander« que, l'essentiel des circuits d'un tel organe étant réalisé dans la technologie des circuits intégrés, la fonction récepteur sera réalisée sur la même plaquette de silicium que le reste de l'organe, au prix d'un accroissement de surface extrèmement réduit, tous les réglages étant alors commandés au moyen d'une seule broche de connexion, ce qui est très avantageux.

Sur la figure 5A, les fils 20A et 21 véhiculent respectivement les signaux 12 et 11 (de la figure 2). Le signal 11 est donc fourni à l'élément 22. Dans cet élément une comparaison avec la tension de seuil 16 (figure 2) fournit un signal à la fin du palier de retour trame, transmis à l'élément 25 par le fil 23A. Les impulsions de retour ligne sont éliminées, soit par une constante de temps, soit en utilisant un échantillonage entre lesdites impulsions.

Dans l'élément 22, une comparaison est faire aussi avec une tension plus élevée que le palier de retour trame, par exemple 3,5 volts, et fournit par le fil 24A les impulsions de ligne à l'élément 25.

L'élément 25 comporte un compteur, mis en route par l'impulsion sur le fil 23A, et qui compte les impulsions sur le fil 24A. Supposons que l'on désire transmettre 256 bits successivement sur le fil 20A (signal 12, figure 2) il faudra un compteur constitué de 7 diviseurs par 2 successifs. Les 7 sorties de ces 7 compteurs fournissent à un instant donné un nombre à 7 chiffres binaires. La comparaison numérique

4

de ce nombre avec un nombre prédéterminé, indique si les informations transmises s'adressent ou non à l'organe considéré. Supposons par exemple que l'organe soit un amplificateur dit »audio«, et que le réglage ou volume de son soit transmis sur huit bits correspondant aux lignes d'image 64 à 71. Tous les nombres en question ont en commun la partie gauche 1000XXX. Les trois X indiquent que les trois bits de droite peuvent avoir n'importe quelle valeur. Alors la comparaison numérique ci-dessus consistera à vérifier que les quatre bits de gauche sont 1000. Si c'est le cas, un signal de validation est fourni au registre 26 qui enregistre en série, au rythme des lignes (fourni par le fil 24A), les informations véhiculées par le fil 20A. Au comptage de lignes: »72«, c'est à dire: 1001000 le signal de validation a disparu et le compteur est arrêté avec pour contenu les bits correspondants aux numéros de ligne: 64 à 71. Ces bits sont donc mémorisés et sont fournis en permanence au convertisseur numérique/analogique 28 qui délivre sur la borne 29 une grandeur analogique de réglage. Bien entendu des dispositions sont prises pour éviter que cette grandeur prenne une valeur erronée pendant le chargement du registre 26: ces dispositions conventionnelles sont bien connues de l'homme de métier. Le même organe amplificateur »audio« peut aussi recevoir un ordre (par exemple: mono/stéréo) à un seul bit. Le même compteur inclus dans l'élément 25 aura son comptage comparé à un autre mot, à sept bits, afin que pour un compte prédéterminé et un seul, le bit présent sur la ligne 20A signifie »mono« ou »stéréo«. Ce bit est alors mémorisé dans une bascule 126 qui commande un interrupteur 128. Bien entendu tous les ordres de réglage intéressant le même organe, seront décodés par le même compteur dans l'élément 25, ses sorties étant comparées à autant de nombres binaires qu'il y a de réglages différents à réaliser. L'exemple ci-dessus, avec le nombre 1000XXX, a été choisi à dessein pour sa simplicité. Si tous les réglages sont groupés par huit bits, cet exemple peut être généralisé à tous les éléments de décodage, simplement en utilisant d'autres »racines« ou blocs de bits de gauche. Avec d'autres choix de nombres, l'homme du métier saurait facilement réaliser les comparaison numériques nécessaires par exemple au moyen d'une combinaison de circuits OU.

La figure 5B donne un exemple de circuit permettant de reconstituer le signal de données 12 et le signal 11 de la figure 2. Sur le fil 5 sont branchés trois comparateurs 151, 152, 153 ayant des seuils respectifs de 2 volts, 4,5 volts et 9 volts. Le signal issu du comparateur 151 est retardé dans le circuit 17, par exemple à l'aide de deux portes inverseuses successives, et est introduit dans l'entrée de données D d'une bascule 191 du type dit »bascule D«. L'entrée d'horloge H de cette même bascule est activée par le signal de sortie du comparateur 152. Sur la sortie 23B on recueille un niveau haut pendant le retour de trame, et un niveau bas pendant le reste du temps. Le signal de sortie du comparateur 152 sur la connexion 24B, qui fournit les impulsions de retour ligne, est retardé dans le circuit 18, analogue au circuit 17, et est introduit dans l'entrée horloge 4 d'une seconde bascule 192 de même type; dont l'entrée de données D est reliée à la sortie du comparateur 153, et l'entrée de remise à zéro R est reliée à la sortie 23B. Le signal de la sortie 20B est donc à zéro pendant les retours de trame et analogue au signal de données 12 de la figure 2 pendant le reste du temps.

Les signaux 20B, 23B, 24B de ce montage peuvent dont être introduits sur les connexions respectives 20A, 23A, 24A de la figure 5A, le circuit 22 devenant alors inutile.

En ce qui concerne les organes à la disposition de l'usager, ou organes »émetteurs«, deux cas peuvent se présenter: par exemple l'organe de télécommande 1 utilise exclusivement des touches, et les fonctions analogiques sont alors réglées par modifications progréssives dans le sens voulu, grâce à des touches »+« et »−«. Un organe de commande 3 situé sur le téléviseur peut au contraire comporter des potentiomètres, fixant mécaniquement une position de réglage. De même, en ce qui concerne les commutations, les touches de télécommande agiront par impulsions selon une logique: »un coup = éteint, un coup = allumé«. Au contraire, les boutons du téléviseur peuvent rester mécaniquement maintenus dans une position déterminée par l'usager.

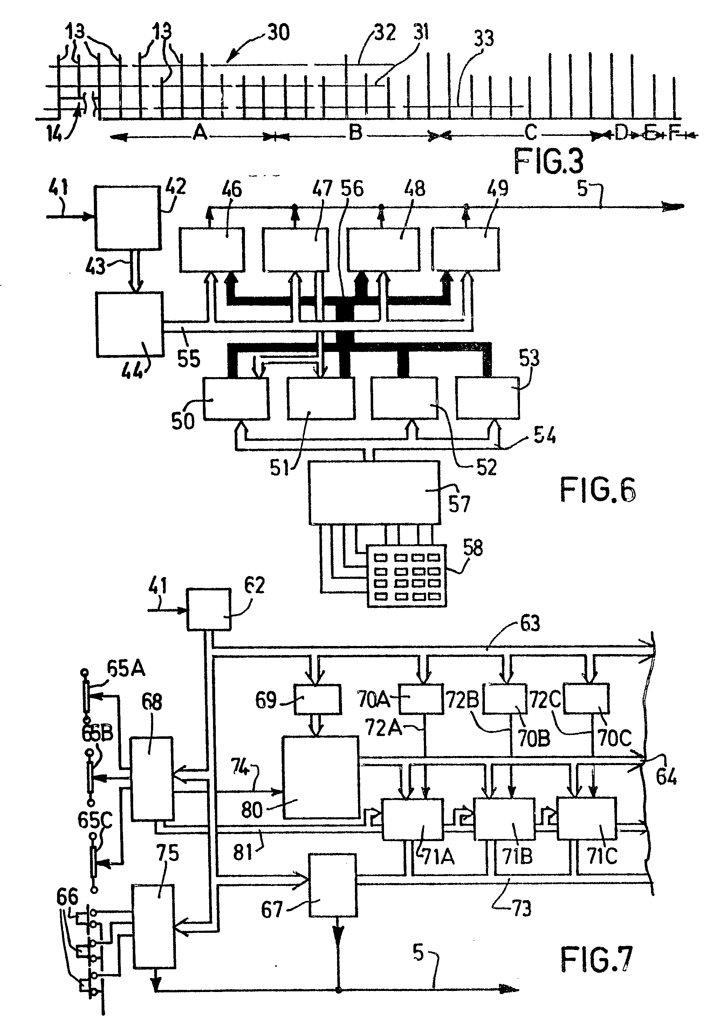

La figure 6 montre comment réaliser une commande à base de touches +/− et de touches à impulsions. L'exemple choisi concerne le réglage et la sélection des programmes. Le dispositif comporte un clavier 58, un élément de décodage 57, une mémoire de valeurs de réglage 51, une mémoire tampon 50, un générateur de tension de varicap 52, un séquenceur de bandes et normes 53, des modules d'écriture sur la ligne, 46 à 49, un élément de détection de synchronisation 42, un séquenceur 44. On retrouve bien entendu, la ligne 5 de la figure 1. L'ensemble des éléments 42 à 56 constitue une partie du bloc 10 de la figure 1 (une autre partie étant constituée par des éléments de la figure 7).

L'ensemble du clavier 58 et de son système de décodage 57 est réalisé conventionnellement. Le clavier 58 peut être placé sur le téléviseur. La présence éventuelle de quelques touches supplémentaires destinées à utiliser au mieux les possibilités apportées par la numérisation ne modifie pas les principes connus de cet ensemble 57−58. On dispose donc, en sortie de l'élément de décodage 57, sur la ligne multifilaire, dite bus, 54 qui transmet à la fois des adresses et des données, d'une information codée désignant l'opération a effectuer à un instant donné. Cette information peut avoir une présence éphémère sur le bus 54. Celui-ci doit donc être lu périodiquement, à cadence suffisante, par chacun des éléments qui lui sont raccordés 50, 52, 53. Ceci est encore une caractéristique connue des dispositifs de ce genre. Une lecture à cadence d'image est suffisante, et permet de mettre à jour les mémoires pendant la durée d'un retour trame. En effet on n'aura à chaque fois qu'une mémoire à mettre à jour, qui sera désignée par le bus 54. Les types d'opérations réalisables par ce dispositif sont par exemple:

0 089 731

— changement de programme
— changement de bande ou de norme
— réglage de la fréquence de réception d'un programme: augmenter ou diminuer
— recherche automatique de programme.

La mémoire tampon 50 contient à un instant donné les caractéristiques du programme en cours: son numéro, la tension de varicap pour la syntonisation, la bande et la norme.

La mémoire 51 contient en permanence les caractéristiques de chaque programme selon son numéro. Ces caractéristiques sont: la tension d'accord de varicap, la bande et la norme.

Avec les deux mémoires 50, 51 il est donc possible de modifier temporairement le réglage du programme en cours, sans toucher à celui mémorisé dans la mémoire 51. Si par contre on le désire, on peut faire entrer dans 51 les valeurs présentes dans 50, pour les mémoriser définitivement. On peut aussi à tout instant remplacer les valeurs présentes dans 50, par une valeur lue dans 51. Ces deux opérations peuvent se faire avantageusement via le fil de données 5. Chacune des mémoires 50 et 51 peut en effet »écrire« sur ce fil via les éléments 46, 48 et 49, et chacune peut »lire« sur ce fil via l'élément 47. Dans la durée d'une image on peut donc transférer des informations de 50 dans 51 ou vice versa, la signification des données étant indiquée par leur position dans le temps, et les ordres de lecture ou d'écriture étant donnés par le bus 54.

L'élément 52 sert à l'accord manuel ou à l'accord automatique. Il contient un compteur/décompteur qui est incrémenté/décrémenté lors de l'action sur une touche $+/-$ du clavier 58, et qui modifie ainsi progressivement la tension de varicap. Cette tension est inscrite sur le fil 5 par l'élément 48. L'action d'incrémentation/décrémentation est commandée par un générateur d'impulsions non représenté qui sert d'horloge au compteur/décompteur et dont la vitesse dépend d'une information fournie au clavier par l'usager.

L'élément 53 comprend lui aussi un petit compteur (par 4) qui avance d'un coup lorsque l'usager appuie sur une touche dont le rôle est de changer la norme. Un autre dispositif semblable sert au changement de bande.

La tension d'accord peut être indiquée par 12 bits (4096 valeurs différentes), la bande et la norme par 2+2 bits, le numéro de programme par 4 bits (pour 16 programmes). Le bus multifilaire 56 comporte donc au total 20 fils, ceux-ci allant tous vers l'élément 50, 16 fils (soit 12+2+2) allant vers l'élément 51, 12 vers l'élément 52, 4 (soit 2+2) vers l'élément 53. A l'autre extrémité du bus, quatre fils vont vers l'élément 46 d'écriture du numéro de programme, douze fils vont vers l'élément 48 d'écriture de la tension de varicap, 4 fils (soit 2+2) vont vers l'élément 49 d'écriture de la norme et de la bande. Il faut bien voir que les bus 54, 55, 56 sont à l'intérieur du circuit intégré et n'impliquent aucun cablage de fils dans le téléviseur. Le signal dit »sandcastle« étant fourni en 41 à l'élément 42, ce dernier en extrait les impulsions de retour ligne et de retour image qu'il fournit par la liaison 42 à l'élément 44. Ce dernier comporte un compteur d'impulsions de ligne, remis à zéro par l'impulsion de trame. Ces fonctions sont semblables à celles que comportent les éléments 22 et 25 décrits ci-dessus en regard de la figure 5. De même la comparaison numérique du comptage des lignes avec un nombre prédéterminé détermine lequel des éléments 46 à 49 d'écriture sur la ligne soit entrer en fonction et quand. Chacun de ces éléments est un registre parallèle-série. Il reçoit en parallèle par le bus multifilaire 56 les informations à transmettre, et les envoie en série sur la ligne 5, au rythme d'un bit par ligne de balayage d'image, à partir d'un instant de départ déterminé par l'élément 44. C'est ce dernier donc qui fournit, via le bus multifilaire 55, des impulsions d'horloge à chacun des registres 46 à 49, chaque train d'impulsions étant fourni à chaque registre pendant la période qui lui revient. Ceci est obtenu au moyen de portes qui laisent passer les impulsions de ligne vers tel ou tel élément 46 à 49, selon une autorisation fournie par le résultat de la comparaison du comptage de lignes avec plusieurs nombres prédéterminés correspondants chacun à un des éléments en question.

En même temps que les impulsions de ligne servant d'impulsions d'horloge, l'élément 44 fournit un signal d'autorisation d'émission sur la ligne 5 à l'élément 46 à 49 qui est alors sélectionné. En l'absence de ce signal la sortie de chaque élément 46 à 49 sur la ligne 5 est dans un état dit haute impédance.

La figure 7 montre comment réaliser une commande à base de potentiomètres et de touches mécaniques. Des potentiomètres de réglage sont indiqués par 65, des touches d'interrupteurs mécaniques sont indiqués en 66. La position de tous ces potentiomètres et de tous ces interrupteurs est testée, par exemple une fois par image, ce qui est largement suffisant. L'élément 75, qui écrit directement sur la ligne 5, comporte une bascule par interrupteur, ici trois bascules. Le signal »sandcastle« est fourni par 41 à l'élément 62, lequel distribue sur le bus 63 les impulsions ligne et trame, ainsi que les bits de comptage du nombre de lignes de chaque image. L'élément 75 est validé lorsque l'adressage par le bus 63 correspond à son adresse: lorsque le numéro de ligne voulu est atteint, un bit correspondant à l'état de l'interrupteur est envoyé sur la ligne 5, par branchement de la sortie de la bascule correspondante sur la ligne 5.

L'élément 68 de la même manière, commute chacun des curseurs de potentiomètre, au moyen d'interrupteur analogiques, sur le fil d'entrée 74 du convertisseur 80 analogique/numérique. Le résultat de la conversion est immédiatement envoyé sur les mémoires 71 par le bus 64.

A chaque image donc, toutes les mémoires sont remises à jour. La mémoire voulue est sélectionnée

6

**0 089 731**

par une information envoyée sur le bus 81 par l'élément 68, et activée en écriture par une information en provenance du convertisseur 80 lorsque la conversion est terminée. L'ordre de convertir est donné par l'élément 69 à l'instant voulu de chaque image. Par comparaison du comptage présent sur le bus 63 avec un nombre présédeterminé, chaque élément 70 commande le branchement via le bus 73 de chaque mémoire 71 à l'instant voulu sur le registre 67, qui transmet alors son contenu en série sur la ligne 5, au rythme d'un bit par ligne d'image. Ici aussi, les bus 63, 64, 81 sont à l'intérieur du circuit intégré.

Bien entendu c'est en aval du montage de la figure 6 et de celui de la figure 5 qu'on place le cas échéant un circuit combinant les bits de données avec le signal de synchronisation, montage par exemple conforme à celui représenté par la figure 4.

Dans les téléviseurs sans numérisation, la présence d'une télécommande implique que les fonctions accessibles par télécommande sont réglées par touches +/− y compris au niveau du téléviseur. En effet, s'il y avait des potentiomètres, dont chaque position correspond à une valeur de réglage précise, cette valeur pourrait être modifiée par l'action sur la télécommande, en contradiction avec la position du potentiomètre et sans rattrapage possible. Dans le cas d'une numérisation associée à des circuits logiques, on peut associer un potentiomètre sur le téléviseur et des touches +/− sur la télécommande. On prévoiera par exemple qu'une action d'amplitude prédéterminée sur un potentiomètre (l'amplitude étant convertie numériquement est comparée numériquement à la valeur antérieure mise en mémoire) remet à zéro l'effet cumulé antérieur des actions »+« ou »−« de la télécommande, remise à zéro très simple à effectuer numériquement. Ainsi le potentiomètre reprend priorité lorsqu'on l'actionne suffisamment.

Il faut donc bien voir que si l'on a décrit un ensemble de commande à partir de touches +/− et un ensemble à partir de potentiomètres, ceci n'implique pas une dichotomie, et on peut très bien imaginer un circuit intégré comportant côte à côte des agencements de commande de l'une ou de l'autre espèce.

Chacun des circuits décrits à l'aide des figures 6 et 7 peut avantageusement être réalisé dans la technique des circuits intégrés. Il peut être avantageux de réaliser deux circuit distincts, l'un pour les programmes et l'autre pour les réglages, car leurs situations physiques dans le téléviseur sont parfois éloignées l'une de l'autre.

L'afficheur 4 de la figure 1 peut être considéré comme un parmi les différents organes dits »récepteurs«. Son rôle consiste en effet à recevoir de la ligne 5 les informations qui intéressent l'affichage, et à les afficher. Sa partie »récepteur« selon l'invention sera donc semblable à celle des autres récepteur, décrite en regard de la figure 5, le convertisseur numérique/analogique 28 y étant bien entendu remplacé par le dispositif d'affichage, en général numérique, et un interrupteur tel que 128 y servant à commander une diode électroluminescente.

Les circuits récepteurs de la figure 5 au lieu d'être intégrés à chaque fonction à commander, peuvent être groupés dans un circuit intégré récepteur, spécialisé dans le décodage des informations lues sur le fil 5, et monté sur le chassis avec les éléments à commander. Ceci entraîne un nombre de liaisons plus grand, sur le circuit imprimé de ce chassis pour relier ce circuit aux différentes fonctions à commander, mais apporte quand même l'avantage de n'avoir qu'un seul (ou deux) fil(s) entre chassis et façade.

## Revendications

1. Procédé pour transmettre, dans un récepteur de télévision, des messages d'informations entre un organe de commande et plusieurs organes à commander, selon lequel on code numériquement lesdites informations et on les transmet séquentiellement sur une ligne, caractérisé en ce qu'on déclenche chaque début de message en synchronisme avec un signal de télévision dit de trame ou d'image, en ce qu'on transmet les bits de chaque information en séquence sur la susdite ligne qui est unifilaire, et en ce qu'on utilise le numéro d'ordre de chaque ligne de balayage dans l'image pour définir quel organe à commander est concerné par un bit transmis à un instant déterminé, ainsi que la signification de ce bit.

2. Procédé selon la revendication 1, caractérisé en ce qu'on transmet un bit par ligne de balayage d'image.

3. Procédé selon l'une des revendications 1 ou 2, caractérisé en ce que la ligne unique transmettant les informations est utilisée en plus pour transmettre les signaux de synchronisation de ligne et trame, grâce à un double codage analogique.

4. Téléviseur utilisant le procédé selon la revendication 1, dont les données de réglage ou de commutation sont transmises, au moyen d'un codage numérique par bits, entre des moyens de commande à la disposition de l'usager et des organes à commander du téléviseur, caractérisé en ce que chaque organe ou groupe d'organes à commander est muni d'un circuit destiné à reconnaître un (des) numéro(s) prédéterminé(s) de ligne(s) de balayage d'image, de façon à autoriser les bits transmis à commander ledit organe à certains instants seulement.

5. Téléviseur selon la revendication 4, caractérisé en ce qu'il comporte une ligne unifilaire pour transmettre en séquence les données vers les organes à commander.

7

6. Téléviseur selon la revendication 5, caractérisé en ce qu'il comporte une ligne unifilaire pour transmettre en même temps les données et leur séquencement vers les organes à commander.

## Patentansprüche

1. Verfahren zum Übertragen von Informationsdaten zwischen einem Bedienungselement und mehreren zu bedienenden Elementen in einem Fernsehempfänger, wobei die Informationen digital kodiert sind und wobei die Übertragung sequentiell über eine Leitung erfolgt, dadurch gekennzeichnet, daß jeder Informationsanfang synchron zu einem Fernsehsignal, das als Vertikal- oder Bildsignal bezeichnet wird, ausgeschaltet wird, daß die Bits jeder Information in Folge über die Leitung, die einadrig ist, übertragen werden und daß die Reihenfolgenummer jeder Abtastlinie in dem Bild zum Definieren, welches zu bedienende Element zu einem bestimmten Zeitpunkt von einem Bit beaufschlagt wird, ebenso wie die Bedeutung dieses Bits benutzt wird.

2. Verfahren nach Anspruch 1, dadurch gekennzeichnet, daß je Bildabtastzeile ein Bit übertragen wird.

3. Verfahren nach einem der Ansprüche 1 oder 2, dadurch gekennzeichnet, daß die einzige Leitung, welche die Informationen überträgt, außerdem zum Übertragen der Vertikal- und Horizontal-Synchronsignale verwendet wird und zwar durch eine doppelte analoge Kodierung.

4. Fernsehempfänger, bei dem das Verfahren nach Anspruch 1 angewandt wird, wobei die Regel- oder Schaltdaten übertragen werden mittels einer digitalen Kodierung mit Bits zwischen Bedienungsmitteln, die dem Benutzer zur Verfügung stehen und zu bedienenden Elementen des Fernsehempfängers, dadurch gekennzeichnet, daß jedes zu bedienende Element bzw. jede Gruppe zu bedienender Elemente mit einer Schaltungsanordnung versehen ist zum Wiedererkennen einer vorbestimmten Nummer einer Abtastzeile bzw. zum Wiedererkennen von vorbestimmten Nummern von Abtastzeilen und zwar derart, daß die übertragenen Bits das betreffende Element nur zu bestimmten Zeitpunkten bedienen können.

5. Fernsehempfänger nach Anspruch 4, dadurch gekennzeichnet, daß dieser mit einer einadrigen Leitung zum Übertragen der Daten der Reihe nach zu den bedienenden Elementen versehen ist.

6. Fernsehempfänger nach Anspruch 5, dadurch gekennzeichnet, daß dieser eine einadrige Leitung aufweist zur gleichzeitigen Übertragung der Daten und ihrer Reihenfolge zu den zu bedienenden Elementen.

## Claims

1. A method of transferring in a television receiver, information messages between a control member and several components to be controlled, in accordance with which said information components are digitally encoded and sequentially transmitted over a line, characterized in that each start of a message is triggered synchronously with a television signal, called the frame or picture signal, and that the bits of each information are sequentially transmitted over the above-mentioned line, which is a single-channel line, and the serial number of each scanning line in the picture is used to define by means of a bit transmitted at a predetermined instant which component to be controlled is involved, and also the significance of this bit.

2. A method as claimed in Claim 1, characterized in that one bit per picture scanning line is transferred.

3. A method as claimed in one of the Claims 1 or 2, characterized in that the single line through which the information is transmitted is further used to transmit the line and frame synchronizing signals, thanks to of a double analogue encoding operation.

4. A television set using the method as claimed in Claim 1, in which the control data or the switching data are transmitted digitally encoded between the control means available to the user and the control members of the television set, characterized in that each member or a group of members to be controlled comprises a circuit intended to recognize a predetermined number or predetermined numbers of the frame scanning line(s), so as to authorize the transmitted bits to control said members at certain instants only.

5. A television set as claimed in Claim 4, characterized in that it comprises a single-wire line for sequentially transmitting the data to the control member.

6. A television set as claimed in Claim 5, characterized in that it comprises a single-wire line for simultaneously transferring the data and their sequencing to the members to be controlled.

FIG.1

FIG.2

FIG.4

FIG.5

FIG.3

FIG.6

FIG.7